# EUROPÄISCHE PATENTSCHRIFT

(11) **EP 1 306 202 B1**
(45) Veröffentlichungstag und Bekanntmachung des Hinweises auf die Patenterteilung: **26.09.2007**
(21) Anmeldenummer: 02022809.4
(22) Anmeldetag: 11.10.2002
(51) Int. Cl.: B32B 1/08, B32B 25/08, F16L 11/127

(54) **Leitfähiger, mehrschichtiger Schlauch**
Electrically conductive multilayer hose
Tuyau multicouche souple électriquement conducteur

(30) Priorität: 24.10.2001 DE 10152575
(43) Veröffentlichungstag der Anmeldung: 02.05.2003
(73) Patentinhaber: VERITAS AG, 63571 Gelnhausen (DE)
(72) Erfinder: van Hooren, Marc, Dr., 63571 Gelnhausen (DE)
(74) Vertreter: Grünecker, Kinkeldey, Stockmair & Schwanhäusser Anwaltssozietät

(56) Entgegenhaltungen:
- EP-A- 0 582 301
- EP-A- 0 730 115
- WO-A-96/00657
- DATABASE WPI Section Ch, Week 198750 Derwent Publications Ltd., London, GB; Class A18, AN 1987-352179 XP002245074 & JP 62 255693 A (MEIDENSHA ELEC MFG CO LTD), 7. November 1987 (1987-11-07)

## Beschreibung

Die Erfindung betrifft einen mehrschichtigen Schlauch, insbesondere für die Beförderung von Kraftstoffen, mit einer Außenschicht und einer leitfähigen, fluorhaltigen, elastischen Innenschicht.

Aus der EP 582 301 ist ein entsprechendes mehrschichtiges Rohr bekannt, mit einer als Innenschicht ausgebildeten Sperrschicht aus einem Fluorthermoplast, einer aus einem Gummimaterial bestehenden Zwischenschicht und einer aus einem Gummimaterial bestehenden Außenschicht. Hierbei kann das Fluorthermoplast der Innenschicht einen leitfähigen Zusatz, z.B. Ruß oder Edelstahlfasern, enthalten. Dieser leitfähige Zusatz soll dem Rohr eine ausgezeichnete Feuerbeständigkeit, sowie Schutz vor elektrostatischer Aufladung verleihen.

Aus der EP-A-0 730115 ist ein Mehrschichtrohr mit elektrischr leitfähiger Innenschicht bekannt, enthaltend folgende Schichten:
- Außenschicht aus einer thermoplastischen Formmasse und
- Innenschicht aus einer elektrisch leitfähigen thermoplastischen Formmasse, die Graphit-Fibrillen enthält.

Die beschriebenen Mehrschichtrohre sind hierbei auch zum Transport petrochemischer Stoffe auf dem Kraftfahrzeugsektor geeignet.

Aus der WO 96 00657 A ist ein mehrschichtiger Schlauch für Kraftfahrzeuge bekannt, umfassend eine relative dünne Innenschicht aus einer elastomerem Form eines FKM-Fluorpolymers und eine relativ dünne Zwischenschicht aus einer extrudierten thermoplastischen Form eines HHV-Flucxpotymers sowie einer relativ dicken elastomeren Polymerschicht an der Außenoberfläche.

Ferner ist in dem Abstract der JP 1986009692219860428 die Herstellung eines Rohres beschrieben, wobei unter anderem auch ein Fluorharz zu einem Rohr extrudiert werden kann, welches bis zu 55 Vol.-% Graphitpulver enthalten kann.

Es ist ferner bekannt Elastomermischungen durch die Verwendung spezieller Leitfähigkeitsruße hoher Aktivität, d.h. Ruß mit kleiner Teilchengröße und großer Oberfläche, mit antistatischer bzw. leitfähiger Ausrüstung zu versehen.

Diese bekannte Verwendung lässt sich jedoch nicht ohne weiteres auf Fluorelastomere übertragen, da diese Art der leitfähigen bzw. antistatischen Einstellung aufgrund der hochgradig verstärkenden Wirkung derartiger Rußtypen zu unzureichenden physikalischen und dynamischen Eigenschaften des fertigen Bauteils führt. Ferner ist die solchermaßen mit Rußteilchen versetzte Fluorelastomermischung bei der Extrusion sehr schlecht verarbeitbar.

Die Aufgabe der vorliegenden Erfindung ist es daher, einen mehrschichtigen Schlauch mit einer Fluorelastomer Sperrschicht zur Verfügung zu stellen, welcher sich nicht nur durch gute Verarbeitbarkeit, sondern auch durch gute Eigenschaften im Betrieb auszeichnet.

Diese Aufgabe wird durch einen mehrschichtigen Schlauch der bekannten Gattung dadurch gelöst, dass die Innenschicht ein mit Graphit versetztes, fluorhaltiges Elastomer enthält.

Der bereitgestellte mehrschichtige Schlauch erfüllt die an Kraftstoffschläuche gestellten Anforderungen besonders gut. Durch den Einsatz von Graphit als leitfähiger Zusatz in der fluorhaltigen Elastomermischung werden im Hinblick auf die Verarbeitbarkeit gute rheologische Eigenschaften erzielt. Im Gegensatz zu Ruß ist Graphit physikalisch inert, d.h. die Füllstoff-Polymer-Wechselwirkung und somit die verstärkende Wirkung aufgrund fehlender mechanischer Zahnung ist deutlich schwächer ausgebildet. Diese Mischungen zeigen ein sicheres Verarbeitungsverhalten, sowohl bei der Mischungsherstellung, als auch bei der Extrusion.

Mehrschichtige Kraftstoffschläuche mit leitfähigen Fluorelastomeren als Innen- und Barriereschicht weisen gegenüber den bekannten Schläuchen mit Barriereschichten aus Fluorthermoplasten eine höhere Flexibilität, Dämpfung und eine größere dynamische Belastbarkeit der Bauteile auf.

Gemäß einer bevorzugten Ausführungsform kann das fluorhaltiges Elastomer der Innenschicht ein HFP/VDF/TFE Terpolymer oder ein VDF/HFP Copolymer sein. Hierbei kann das Terpolymer einen Fluorgehalt von mindestens 69% und das Copolymer von mindestens 65% aufweisen.

In der Praxis hat sich gezeigt, dass dieses Material die Anforderungen, die an die innere mit dem Kraftstoff in Kontakt stehende Schicht besonders gut erfüllt. Das Material ist ausreichend beständig gegen die Kraftstoffe und stellt gleichzeitig eine gute Sperrwirkung zur Verfügung.

Vorteilhafterweise kann das Graphit dem fluorhaltigem Elastomer als Graphitpulver zugegeben sein. Insbesondere kann hierbei ein synthetisches Graphitpulver verwendet werden.

Gemäß einer bevorzugten Ausführungsform kann das Graphitpulver einen mittleren Teilchendurchmesser von weniger als 4 µm aufweisen.

Der angegebene Teilchendurchmesser hat sich insbesondere im Hinblick auf die gute Verarbeitbarkeit des Material und die leitfähigen Eigenschaften als besonders geeignet erwiesen.

Hierbei kann der spezifische Oberflächenwiderstand der inneren Schicht maximal 10⁹Ω und bevorzugt kleiner 10⁶Ω betragen.

In der Praxis haben sich diese Werte für den geplanten Einsatz als geeignet herausgestellt.

Vorteilhafterweise kann der Schlauch 15-30 Gewichtsteile Graphit auf 100 Gewichtsteile Polymer enthält.

Gemäß einer weiteren Ausführungsform kann zwischen der Außenschicht und der Innenschicht eine Zwischenschicht angeordnet sein.

Hierbei kann die Zwischenschicht aus einem Elastomer bestehen. Vorteilhafterweise wird das Elastomer aus der CR, CPE, EVM, NBR, CSM, ECO, AEM, ACM, und VMQ umfassenden Gruppe gewählt.

Vorteilhafterweise kann zwischen der Außenschicht und der Zwischenschicht noch eine Verstärkungsschicht angeordnet ist. Hierbei kann Verstärkungsschicht aus Nylon-, Baumwolle-, Celluose-, Rayon-, Polyester- oder Aramidfasern oder aus Hochmodalzwirn bestehen, die auf die Zwischenschicht durch Umstricken, Umwickeln oder Umflechten aufgebracht werden.

Hierdurch kann die Festigkeit des erfindungsgemäßen Schlauches noch zusätzlich erhöht werden.

Ferner kann vorgesehen sein, dass die Außenschicht aus einem Elastomer besteht. Hierbei kann das Elastomer aus der CPE, EVM, NBR, CR, CSM, ECO, AEM, ACM, und VMQ umfassenden Gruppe gewählt werden.

Die für die Zwischenschicht und Außenschicht angegebenen Materialien haben sich hierbei in Bezug auf ihre Eigenschaften für den erfindungsgemäßen Einsatz als auch in Bezug auf die Verbindung der einzelnen Schichten besonders bewährt.

Gemäß einer weiteren bevorzugten Ausführungsform können die Dicken der einzelnen Schichten wie folgt sein: Innenschicht 0,4 mm bis 1,2 mm, Zwischenschicht 0,5 mm bis 1,2 mm und Außenschicht 0,8 mm bis 1,7 mm.

Ferner können sich folgende Dicken für die Schichten bewähren: Innenschicht 0,6 mm bis 1,0 mm, Zwischenschicht 0,7 mm bis 1,0 mm und Außenschicht 1,0 mm bis 1,5 mm.

Vorteilhafterweise können die Dicken der einzelnen Schichten wie folgt sein:
Innenschicht 0,7 mm bis 0,8 mm, Zwischenschicht 0,8 mm bis 0,9 mm und Außenschicht 1,2 mm bis 1,3 mm.

Diese Schichtdicken haben sich in der Praxis als besonders geeignet in bezug auf die an den Schlauch gestellten Anforderungen erwiesen.

Vorteilhafterweise kann die Zwischenschicht einen Haftvermittler enthalten.

Hierdurch wird eine verbesserte Verbindung zwischen der Zwischenschicht und den an diese angrenzenden Schichten gewährleistet und somit auch die Lebensdauer des Schlauches verlängert.

Ein bevorzugtes Ausführungsbeispiel der Erfindung wird im folgenden unter Bezugnahme einer Zeichnung näher erläutert. Es zeigt:

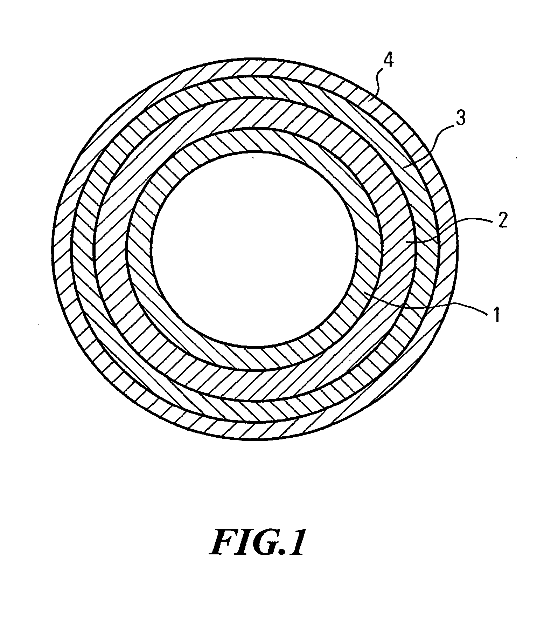

Figur 1: einen Querschnitt durch einen erfindungsgemäßen mehrschichtigen Schlauch.

Der in Figur 1 dargestellte Schlauch umfasst eine erste innere Schicht 1, die aus einem mit Graphit versetztem VDF/HFP Copolymer oder vorzugsweise aus einem HFP/VDF/TFE Terpolymer besteht. Diese Materialien weisen eine ausreichende Sperrwirkung gegen die durch den eingesetzten Schlauch hindurchgeleiteten Medien auf. Durch die Beimengung von Graphit wird eine antistatische bzw. leitfähige Ausrüstung des Elastomers erzielt.

Das Terpolymer zeichnet sich hierbei durch vorzugsweise einen Fluorgehalt von wenigstens 69% und einer Mooney Viskosität (ML₁₊₁₀ 100°C) kleiner 65 aus. Ferner ist es diaminisch, bisphenolisch oder vorzugsweise peroxidisch vernetzbar.

An diese erste Schicht schließt sich eine zweite Schicht 2 aus einem Elastomer an. Vorzugsweise wird das Elastomer aus der CR, CPE, EVM, NBR, CSM, ECO, AEM, ACM, und VMQ umfassenden Gruppe gewählt werden. Ferner kann zu der zweiten Schicht ein Haftvermittler zugegeben werden um, die Verbindung der einzelnen Schichten untereinander zu verbessern.

Die Außenschicht 4 wird auch von einem Elastomer, vorzugsweise CPE, EVM, NBR, CR, CSM, ECO, AEM, ACM, oder VMQ gebildet werden.

Zwischen der Außenschicht 5 und der Zwischenschicht 2 ist des weiteren eine Verstärkungsschicht 3 angeordnet, die zur Erhöhung der Festigkeit des Schlauches beiträgt. Als Material für die Verstärkungsschicht 5 haben sich insbesondere Baumwolle-, Celluose-, Reyon-, Nylon-, Polyester- oder Aramidfasern, sowie Hochmodalzwirn als geeignet erwiesen.

Eine bevorzugte Zusammensetzung des die Innenschicht bildenden Materials ist wie folgt:

| | |
|---|---|
| Fluorkautschuk | 100 |
| Graphit | 15-30 |
| Ruß MT 990/N772 | 8-14 |
| Säureakzeptor | 0-4 |
| Coaktivator | 2-5 |
| Peroxid | 2-4 |
| Verarbeitungsmittel | 0,5-1 |

## Patentansprüche

1. Mehrschichtiger Schlauch, insbesondere für die Beförderung von Kraftstoffen, mit einer Außenschicht und einer leitfähigen, fluorhaltigen Innenschicht, **dadurch gekennzeichnet, dass** die Innenschicht ein mit Graphit versetztes fluorhaltiges Elastomer enthält.

2. Mehrschichtiger Schlauch nach Anspruch 1, **dadurch gekennzeichnet, dass** das fluorhaltiges Elastomer der Innenschicht ein HFP/VDF/TFE Terpolymer ist.

3. Mehrschichtiges Rohr nach Anspruch 2, **dadurch gekennzeichnet, dass** das Terpolymer einen Fluorgehalt von mindestens 69% aufweist.

4. Mehrschichtiger Schlauch nach Anspruch 1, **dadurch gekennzeichnet, dass** fluorhaltige Elastomer der Innenschicht ein VDF/HFP Copolymer ist.

5. Mehrschichtiger Schlauch nach Anspruch 4, **dadurch gekennzeichnet, dass** Copolymer einen Fluorgehalt von mindestens 65% aufweist.

6. Mehrschichtigen Schlauch nach einem der Ansprüche 1 bis 5, **dadurch gekennzeichnet, dass** das Graphit dem fluorhaltigem Elastomer als Graphitpulver zugegeben ist.

7. Mehrschichtigen Schlauch nach Anspruch 6, **dadurch gekennzeichnet, dass** das Graphitpulver ein synthetisches Graphit ist.

8. Mehrschichtigen Schlauch nach Anspruch 6 oder 7, **dadurch gekennzeichnet, dass** das Graphitpulver einen mittleren Teilchendurchmesser von weniger als 4 µm aufweist.

9. Mehrschichtigen Schlauch nach einem der Ansprüche 1 bis 8, **dadurch gekennzeichnet, dass** der spezifische Oberflächenwiderstand der inneren Schicht maximal 10⁹Ω und vorzugsweise weniger als 10⁶Ω beträgt.

10. Mehrschichtigen Schlauch nach einem der Ansprüche 1 bis 9, **dadurch gekennzeichnet, dass** das fluorhaltige Elastomer 15-30 Gewichtsteile Graphit auf 100 Gewichtsteile Polymer enthält.

11. Mehrschichtigen Schlauch nach einem der Ansprüche 1 bis 10, **dadurch gekennzeichnet, dass** zwischen der Außenschicht und der Innenschicht eine Zwischenschicht angeordnet ist.

12. Mehrschichtigen Schlauch nach Anspruch 11, **dadurch gekennzeichnet, dass** die Zwischenschicht aus einem Elastomer besteht.

13. Mehrschichtigen Schlauch nach Anspruch 12, **dadurch gekennzeichnet, dass** das Elastomer der Zwischenschicht aus der CR, CPE, EVM, NBR, CSM, ECO, AEM, ACM, und VMQ umfassenden Gruppe gewählt ist.

14. Mehrschichtigen Schlauch nach einem der Ansprüche 1 bis 13, **dadurch gekennzeichnet, dass** zwischen der Außenschicht und der Zwischenschicht noch eine Verstärkungsschicht angeordnet ist.

15. Mehrschichtigen Schlauch nach Anspruch 14, **dadurch gekennzeichnet, dass** die Verstärkungsschicht aus Baumwolle-, Cellulose-, Reyon-, Nylon-, Polyester- oder Aramidfasern oder Hochmodalzwirn besteht, die auf die Zwischenschicht durch Umstricken, Umwickeln oder Umflechten aufgebracht sind.

16. Mehrschichtigen Schlauch nach einem der Ansprüche 1 bis 15, **dadurch gekennzeichnet, dass** die Außenschicht aus einem Elastomer besteht.

17. Mehrschichtigen Schlauch nach Anspruch 16, **dadurch gekennzeichnet, dass** das Elastomer der Außenschicht aus der CPE, EVM, NBR, CR, CSM, ECO, AEM, ACM, und VMQ umfassenden Gruppe gewählt ist.

18. Mehrschichtigen Schlauch nach einem der Ansprüche 1 bis 17, **dadurch gekennzeichnet, dass** die Dicken der einzelnen Schichten wie folgt sind: Innenschicht 0,4 mm bis 1,2 mm, Zwischenschicht 0,5 mm bis 1,2 mm und Außenschicht 0,8 mm bis 1,7 mm.

19. Mehrschichtigen Schlauch nach einem der Ansprüche 1 bis 17, **dadurch gekennzeichnet, dass** die Dicken der einzelnen Schichten wie folgt sind:
Innenschicht 0,6 mm bis 1,0 mm, Zwischenschicht 0,7 mm bis 1,0 mm und Außenschicht 1,0 mm bis 1,5 mm.

20. Mehrschichtigen Schlauch nach einem der Ansprüche 1 bis 17, **dadurch gekennzeichnet, dass** die Dicken der einzelnen Schichten wie folgt sind: Innenschicht 0,7 mm bis 0,8 mm, Zwischenschicht 0,8 mm bis 0,9 mm und Außenschicht 1,2 mm bis 1,3 mm.

21. Mehrschichtiger Schlauch nach einem der Ansprüche 1 bis 20, **dadurch gekennzeichnet, dass** die Zwischenschicht einen Haftvermittler enthält.

## Claims

1. A multilayer hose, especially for conveying fuels, comprising an outer layer and a conductive, fluorine-containing inner layer, **characterized in that** the inner layer comprises a fluorine-containing elastomer mixed with graphite.

2. A multilayer hose according to claim 1, **characterized in that** the fluorine-containing elastomer of said inner layer is a HFP/VDF/TFE terpolymer.

3. A multilayer hose according to claim 2, **characterized in that** the terpolymer has a fluorine content of at least 69%.

4. A multilayer hose according to claim 1, **characterized in that** the fluorine-containing elastomer of said inner layer is a VDF/HFP copolymer.

5. A multilayer hose according to claim 4, **characterized in that** the copolymer has a fluorine content of at least 65%.

6. A multilayer hose according to one of the claims 1 to 5, **characterized in that** the graphite is added to said fluorine-containing elastomer in the form of a graphite powder.

7. A multilayer hose according to claim 6, **characterized in that** the graphite powder is a synthetic graphite.

8. A multilayer hose according to claim 6 or 7, **characterized in that** the graphite powder has an average particle size of less than 4 µm.

9. A multilayer hose according to one of the claims 1 to 8, **characterized in that** the surface resistivity of said inner layer is 10⁹Ω at the most and, preferably, less than 10⁶Ω.

10. A multilayer hose according to one of the claims 1 to 9, **characterized in that** the fluorine-containing elastomer contains 15-30 parts by weight of graphite per 100 parts by weight of polymer.

11. A multilayer hose according to one of the claims 1 to 10, **characterized in that** an intermediate layer is arranged between said outer layer and said inner layer.

12. A multilayer hose according to claim 11, **characterized in that** the intermediate layer consists of an elastomer.

13. A multilayer hose according to claim 12, **characterized in that** the elastomer of the intermediate layer is selected from the group comprising CR, CPE, EVM, NBR, CSM, ECO, AEM, ACM, and VMQ.

14. A multilayer hose according to one of the claims 1 to 13, **characterized in that** the outer layer and the intermediate layer have additionally provided between them a reinforcing layer.

15. A multilayer hose according to claim 14, **characterized in that** the reinforcing layer consists of cotton fibres, cellulose fibres, Rayon fibres, nylon fibres, polyester fibres or aramid fibres or of a high-modal twisted yarn which are applied to said intermediate layer by knitting, winding or braiding them therearound.

16. A multilayer hose according to one of the claims 1 to 15, **characterized in that** the outer layer consists of an elastomer.

17. A multilayer hose according to claim 16, **characterized in that** the elastomer of said outer layer is selected from the group comprising CPE, EVM, NBR, CR, CSM, ECO, AEM, ACM and VMQ.

18. A multilayer hose according to one of the claims 1 to 17, **characterized in that** the thicknesses of the individual layers are as follows: inner layer 0.4 mm to 1.2 mm, intermediate layer 0.5 mm to 1.2 mm and outer layer 0.8 mm to 1.7 mm.

19. A multilayer hose according to one of the claims 1 to 17, **characterized in that** the thicknesses of the individual layers are as follows: inner layer 0.6 mm to 1.0 mm, intermediate layer 0.7 mm to 1.0 mm and outer layer 1.0 mm to 1.5 mm.

20. A multilayer hose according to one of the claims 1 to 17, **characterized in that** the thicknesses of the individual layers are as follows: inner layer 0.7 mm to 0.8 mm, intermediate layer 0.8 mm to 0.9 mm and outer layer 1.2 mm to 1.3 mm.

21. A multilayer hose according to one of the claims 1 to 20, **characterized in that** the intermediate layer contains an adhesion promoter.

## Revendications

1. Tuyau multicouche, en particulier pour l'acheminement de carburants, comprenant une couche extérieure et une couche intérieure fluorée conductrice, **caractérisé en ce que** la couche intérieure contient un élastomère fluoré auquel est mélangé du graphite.

2. Tuyau multicouche selon la revendication 1, **caractérisé en ce que** l'élastomère fluoré de la couche intérieure est un terpolymère HFP/VDF/TFE.

3. Tube multicouche selon la revendication 2, **caractérisé en ce que** le terpolymère présente une teneur en fluor d'au moins 69 %.

4. Tuyau multicouche selon la revendication 1, **caractérisé en ce que** l'élastomère fluoré de la couche intérieure est un copolymère VDF/HFP.

5. Tuyau multicouche selon la revendication 4, **caractérisé en ce que** le copolymère présente une teneur en fluor d'au moins 65 %.

6. Tuyau multicouche selon l'une des revendications 1 à 5, **caractérisé en ce que** le graphite est ajouté à l'élastomère fluoré sous forme de poudre de graphite.

7. Tuyau multicouche selon la revendication 6, **caractérisé en ce que** la poudre de graphite est un graphite synthétique.

8. Tuyau multicouche selon la revendication 6 ou 7, **caractérisé en ce que** la poudre de graphite présente un diamètre de particules moyen de moins de 4 µm.

9. Tuyau multicouche selon l'une des revendications 1 à 8, **caractérisé en ce que** la résistance superficielle spécifique de la couche intérieure est au maximum de 10⁹ Ω et de préférence de moins de 10⁶ Ω.

10. Tuyau multicouche selon l'une des revendications 1 à 9, **caractérisé en ce que** l'élastomère fluoré contient 15-30 parties en poids de graphite pour 100 parties en poids de polymère.

11. Tuyau multicouche selon l'une des revendications 1 à 10, **caractérisé en ce qu'**une couche intermédiaire est disposée entre la couche extérieure et la couche intérieure.

12. Tuyau multicouche selon la revendication 11, **caractérisé en ce que** la couche intermédiaire se compose d'un élastomère.

13. Tuyau multicouche selon la revendication 12, **caractérisé en ce que** l'élastomère de la couche intermédiaire est choisi dans le groupe comprenant CR, CPE, EVM, NBR, CSM, ECO, AEM, ACM et VMQ.

14. Tuyau multicouche selon l'une des revendications 1 à 13, **caractérisé en ce qu'**il est prévu encore une couche de renforcement entre la couche extérieure et la couche intermédiaire.

15. Tuyau multicouche selon la revendication 14, **caractérisé en ce que** la couche de renforcement se compose de fibres de coton, de cellulose, de rayonne, de nylon, de polyester ou d'aramide, ou de fil retordu à haut module qui sont tricotés, enroulés ou tressés autour de la couche intermédiaire.

16. Tuyau multicouche selon l'une des revendications 1 à 15, **caractérisé en ce que** la couche extérieure se compose d'un élastomère.

17. Tuyau multicouche selon la revendication 16, **caractérisé en ce que** l'élastomère de la couche extérieure est choisi dans le groupe comprenant CPE, EVM, NBR, CR, CSM, ECO, AEM, ACM et VMQ.

18. Tuyau multicouche selon l'une des revendications 1 à 17, **caractérisé en ce que** l'épaisseur des couches individuelles est la suivante : couche intérieure 0,4 mm à 1,2 mm, couche intermédiaire 0,5 mm à 1,2 mm et couche extérieure 0,8 mm à 1,7 mm.

19. Tuyau multicouche selon l'une des revendications 1 à 17, **caractérisé en ce que** l'épaisseur des couches individuelles est la suivante : couche intérieure 0,6 mm à 1,0 mm, couche intermédiaire 0,7 mm à 1,0 mm et couche extérieure 1,0 mm à 1,5 mm.

20. Tuyau multicouche selon l'une des revendications 1 à 17, **caractérisé en ce que** l'épaisseur des couches individuelles est la suivante : couche intérieure 0,7 mm à 0,8 mm, couche intermédiaire 0,8 mm à 0,9 mm et couche extérieure 1,2 mm à 1,3 mm.

21. Tuyau multicouche selon l'une des revendications 1 à 20, **caractérisé en ce que** la couche intermédiaire contient un agent adhésif.
